# EUROPÄISCHE PATENTANMELDUNG

(11) **EP 1 607 657 A2**
(43) Veröffentlichungstag der Anmeldung: **21.12.2005**
(21) Anmeldenummer: 05013090.5
(22) Anmeldetag: 17.06.2005
(51) Int. Cl.: F16H 7/12

(54) **Riemenspanneinrichtung und Riemengetriebe mit einer solchen Riemenspanneinrichtung**

(30) Priorität: 19.06.2004 DE 102004029829
(71) Anmelder: DaimlerChrysler AG, 70567 Stuttgart (DE)
(72) Erfinder: Bauer, Artur, 73630 Remshalden (DE); Hoffmann, Michael, 71384 Weinstadt (DE); Kerschbaum, Walter, 73614 Schorndorf (DE)

(57) **Zusammenfassung**

Die Erfindung offenbart eine Riemenspanneinrichtung (30) für ein Riemengetriebe (10) eines Kraftfahrzeugs, die eine erste Riemenspannvorrichtung zum Einstellen der Riemenspannung eines ersten Antriebriemens (25) und eine zweite Riemenspannvorrichtung zum Einstellen der Riemenspannung eines zweiten Antriebriemens (26) aufweist, wobei die Laufebene des ersten Antriebriemens (25) im Wesentlichen parallel zu der Laufebene des zweiten Antriebriemens (26) ist, und wobei die erste Riemenspannvorrichtung und die zweite Riemenspannvorrichtung als integrale Riemenspanneinrichtung (30) an einer gemeinsamen Haltevorrichtung (36) angebracht sind. Auf diese Weise lässt sich ein sehr kompakter Aufbau des Riemengetriebes (10) mit mehreren Nebenaggregaten (18-24) erzielen.

## Beschreibung

Die Erfindung betrifft eine Riemenspanneinrichtung, insbesondere eine Riemenspanneinrichtung für wenigstens zwei Riemenebenen, sowie ein Riemengetriebe mit einer solchen Riemenspanneinrichtung.

In Kraftfahrzeugen werden durch den Fahrzeugmotor üblicherweise verschiedene Nebenaggregate, wie beispielsweise ein Generator, eine Wasserpumpe, eine Servopumpe, ein Kompressor und dergleichen angetrieben. Dieser Antrieb erfolgt durch eine auf der Kurbelwelle des Fahrzeugmotors sitzende Hauptriemenscheibe und einen Endlostreibriemen, der einerseits über die Hauptriemenscheibe und andererseits über auf den Antriebswellen der Nebenaggregate sitzende Nebenriemenscheiben läuft. Für die Funktionsfähigkeit der Nebenaggregate und die Lebensdauer des Treibriemens ist die Einstellung einer bestimmten Riemenspannung des Treibriemens entscheidend. Zur Verbesserung der Funktionsfähigkeit der Nebenaggregate und zur Erhöhung der Lebensdauer des Treibriemens wird allgemein eine federbelastete Riemenspanneinrichtung verwendet, die in der Regel auch eine Dämpfungseinrichtung aufweist, sodass Schlupf und Schwingungen ausgeglichen oder zumindest vermindert werden können.

Der vorliegenden Erfindung liegt die Aufgabe zugrunde, eine Riemenspanneinrichtung bereitzustellen, die eine kompakte und platzsparende Anordnung der Nebenaggregate ermöglicht.

Diese Aufgabe wird durch eine Riemenspanneinrichtung mit den Merkmalen des Anspruchs 1 gelöst. Vorteilhafte Ausgestaltungen und Weiterbildungen der Erfindung sind Gegenstand der Unteransprüche.

Die Riemenspanneinrichtung der Erfindung weist eine erste Riemenspannvorrichtung zum Einstellen der Riemenspannung eines ersten Antriebriemens und eine zweite Riemenspannvorrichtung zum Einstellen der Riemenspannung eines zweiten Antriebriemens auf, wobei die Laufebene des ersten Antriebriemens im Wesentlichen parallel zu der Laufebene des zweiten Antriebriemens ist. Außerdem sind die erste Riemenspannvorrichtung und die zweite Riemenspannvorrichtung als integrale Riemenspanneinrichtung an einer gemeinsamen Haltevorrichtung angebracht. Durch die Integration von zwei Riemenspannvorrichtungen in einer gemeinsamen Riemenspanneinrichtung ist eine besonders kompakte und platzsparende Riemenspanneinrichtung vorgesehen. Außerdem können durch die Bereitstellung von zwei Antriebriemen in zwei im Wesentlichen parallelen Laufebenen die mit diesen beiden Antriebriemen gekoppelten Riemenscheiben und damit auch zum Beispiel die Nebenaggregate eines Kraftfahrzeugs, die mit diesen Riemenscheiben verbunden sind, sehr platzsparend und einfach montiert werden können.

In einer Ausgestaltung der Erfindung enthält die erste Riemenspannvorrichtung einen um eine Drehachse drehbar an der Haltevorrichtung befestigten ersten Spannhebel; eine an einem Ende des ersten Spannhebels drehbar befestigte erste Spannrolle, um welche der erste Antriebriemen geführt ist; und eine erste Spannfeder, deren eines Ende fest an der Haltevorrichtung befestigt ist und deren anderes Ende an dem der ersten Spannrolle abgewandten Ende des ersten Spannhebels befestigt ist, zum Spannen des um die erste Spannrolle geführten ersten Antriebriemens; und die zweite Riemenspannvorrichtung enthält einen um eine Drehachse drehbar an der Haltevorrichtung befestigten zweiten Spannhebel; eine an einem Ende des zweiten Spannhebels drehbar befestigte zweite Spannrolle, um welche der zweite Antriebriemen geführt ist; und eine zweite Spannfeder, deren eines Ende fest an der Haltevorrichtung befestigt ist und deren anderes Ende an dem der zweiten Spannrolle abgewandten Ende des zweiten Spannhebels befestigt ist, zum Spannen des um die zweite Spannrolle geführten zweiten Antriebriemens.

Vorzugsweise sind dabei die Drehachse des ersten Spannhebels und die Drehachse des zweiten Spannhebels als eine gemeinsame Drehachse an der Haltevorrichtung vorgesehen, um einen besonders kompakten Aufbau der Riemenspanneinrichtung zu erzielen.

Auch ist die Haltevorrichtung bevorzugt in der Form einer Trägerplatte ausgebildet, und die erste Riemenspannvorrichtung und die zweite Riemenspannvorrichtung sind spiegelbildlich zu beiden Seiten der Trägerplatte angeordnet, um einen noch kompakteren Aufbau der Riemenspanneinrichtung zu erzielen.

In einer weiteren Ausgestaltung der Erfindung besitzen die erste Spannfeder der ersten Riemenspannvorrichtung und/oder die zweite Spannfeder der zweiten Riemenspannvorrichtung eine Stoßdämpfereigenschaft, um den ersten bzw. den zweiten Antriebriemen zu spannen und Schwankungen der Riemenspannung abzufedern.

Vorzugsweise sind die erste und die zweite Spannfeder an einer gemeinsamen Halterung, die im Wesentlichen parallel zu der gemeinsamen Drehachse der des ersten und des zweiten Spannhebels vorgesehen ist, an der Haltevorrichtung befestigt. Hierdurch lässt sich eine besonders kompakte Bauform der Riemenspanneinrichtung erhalten.

Je nach Anordnung der verschiedenen Aggregate eines Riemengetriebes, in welchem die Riemenspanneinrichtung der Erfindung eingesetzt werden soll, ist es vorteilhaft, wenn die erste und/oder die zweite Riemenspannvorrichtung ferner eine Umlenkrolle zum Umlenken des ersten bzw. des zweiten Antriebriemens aufweist.

Die Riemenspanneinrichtung der vorliegenden Erfindung wird vorteilhafterweise in einem Riemengetriebe für ein Kraftfahrzeug eingesetzt, mit einer ersten Hauptriemenscheibe, die mit einer Kurbelwelle eines Kraftfahrzeugmotors gekoppelt ist; wenigstens einer Nebenriemenscheibe, die mit einer Antriebswelle eines Nebenaggregats verbunden ist; einem ersten Antriebriemen, der um die erste Hauptriemenscheibe und die wenigstens eine Nebenriemenscheibe geführt ist; einer zweiten Hauptriemenscheibe, die ebenfalls mit der Kurbelwelle des Kraftfahrzeugmotors gekoppelt ist; wenigstens einer weiteren Nebenriemenscheibe, die mit einer Antriebswelle eines weiteren Nebenaggregats verbunden ist; einem zweiten Antriebriemen, der um die zweite Hauptriemenscheibe und die wenigstens eine weitere Nebenriemenscheibe geführt ist; und der erfindungsgemäßen Riemenspanneinrichtung zum Einstellen der Riemenspannung des ersten Antriebriemens und zum Einstellen der Riemenspannung des zweiten Antriebriemens, wobei die Laufebene des ersten Antriebriemens um die erste Hauptriemenscheibe und die wenigstens eine Nebenriemenscheibe im Wesentlichen parallel zu der Laufebene des zweiten Antriebriemens um die zweite Hauptriemenscheibe und die wenigstens eine weitere Nebenriemenscheibe ist.

In einer besonderen Ausgestaltung der Erfindung sind die erste Hauptriemenscheibe und die zweite Hauptriemenscheibe koaxial an einer Hauptriemenscheibeneinheit vorgesehen, die mit der Kurbelwelle des Kraftfahrzeugmotors gekoppelt ist. Vorzugsweise weist diese Hauptriemenscheibeneinheit, die mit der Kurbelwelle des Kraftfahrzeugmotors gekoppelt ist, auch einen integrierten Schwingungsdämpfer auf. Durch diese Konstruktion lässt sich auf einfache Weise ein sehr kompaktes Riemengetriebe für ein Kraftfahrzeug aufbauen, das mehrere Nebenaggregate enthält.

Obige sowie weitere Merkmale und Merkmalskombinationen ergeben sich aus der Beschreibung sowie den Zeichnungen. Ein konkretes Ausführungsbeispiel der Erfindung ist in den Zeichnungen vereinfacht dargestellt und in der nachfolgenden Beschreibung näher erläutert.

Dabei zeigen:
- Fig. 1: eine schematische Darstellung des Aufbaus eines Riemengetriebes eines Kraftfahrzeugs, in dem eine Riemenspanneinrichtung gemäß der vorliegenden Erfindung eingesetzt ist;
- Fig. 2: eine Seitenansicht eines Ausführungsbeispiels einer Riemenspanneinrichtung gemäß der vorliegenden Erfindung; und
- Fig. 3: eine Seitenansicht der Riemenspanneinrichtung von Fig. 2 aus Sicht des Pfeils A.

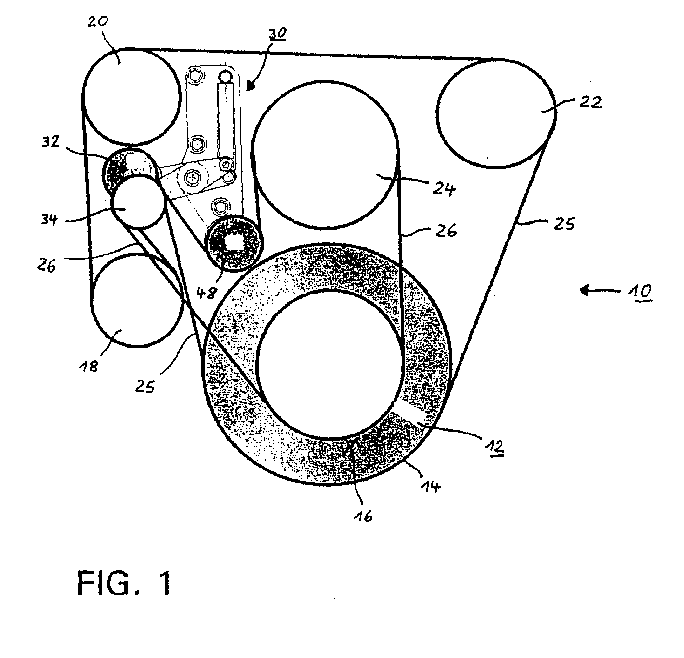

In Fig. 1 ist schematisch der Aufbau eines Riemengetriebes 10 für ein Kraftfahrzeug dargestellt. Das Riemengetriebe 10 umfasst typischerweise eine Hauptriemenscheibeneinheit 12, die mit der Kurbelwelle des Kraftfahrzeugmotors gekoppelt ist, mehrere Nebenriemenscheiben 18 - 24, die mit den jeweiligen Antriebswellen von verschiedenen Nebenaggregaten des Kraftfahrzeugs verbunden sind, zwei Antriebriemen 25 und 26, und eine Riemenspanneinrichtung 30 zum Einstellen der Riemenspannung beider Antriebriemen.

Insbesondere weist die Hauptriemenscheibeneinheit 12, die mit der Kurbelwelle des Kraftfahrzeugmotors gekoppelt ist, eine erste Hauptriemenscheibe 14 und eine zweite Hauptriemenscheibe 16 auf, die koaxial und zueinander in axialer Richtung versetzt an der gemeinsamen Hauptriemenscheibeneinheit 12 vorgesehen sind. Hierdurch ist es möglich, dass der Kraftfahrzeugmotor gleichzeitig einen ersten Antriebriemen 25, der um die erste Hauptriemenscheibe 14 geführt ist, und einen zweiten Antriebriemen 26, der um die zweite Hauptriemenscheibe 16 geführt ist, antreiben kann, wobei die Laufebene des ersten Antriebriemens 25 im Wesentlichen parallel zu der Laufebene des zweiten Antriebriemens 26 ist. Vorzugsweise weist die mit der Kurbelwelle des Kraftfahrzeugmotors gekoppelte Hauptriemenscheibeneinheit 12 auch einen integrierten Schwingungsdämpfer auf.

Es sei an dieser Stelle vorsorglich darauf hingewiesen, dass die vorliegende Erfindung hier als Riemenspanneinrichtung zum Einstellen der Riemenspannung von zwei Antriebriemen für ein Riemengetriebe eines Kraftfahrzeugs dargestellt und beschrieben ist. Die vorliegende Erfindung ist aber nicht nur hierauf beschränkt; vielmehr kann die Erfindung allgemein auch bei anderen Zugmitteln als einem Antriebriemen angewendet werden. Außerdem ist hier eine Riemenspanneinrichtung dargestellt und beschrieben, die zwei Riemenspannvorrichtungen für zwei Antriebriemen eines Riemengetriebes aufweist. Die vorliegende Erfindung ist aber nicht nur auf diese spezielle Ausführungsform beschränkt, sondern kann grundsätzlich auch für Riemenspanneinrichtungen bzw. Riemengetriebe mit mehr als zwei Antriebriemen in unterschiedlichen Laufebenen angewendet werden.

Der erste Antriebriemen 25 ist um die erste Hauptriemenscheibe 14 der Hauptriemenscheibeneinheit 12, drei Nebenriemenscheiben 18, 20 und 22, die mit jeweiligen Antriebswellen von Nebenaggregaten des Kraftfahrzeugs verbunden sind, und eine erste Spannrolle 32 der ersten Riemenspannvorrichtung der integrierten Riemenspanneinrichtung 30 geführt. Der zweite Antriebriemen 26, dessen Laufebene im Wesentlichen parallel zu derjenigen des ersten Antriebriemens 25 ist, ist um die zweite Hauptriemenscheibe 16 der Hauptriemenscheibeneinheit 12, eine weitere Nebenriemenscheibe 24, die mit einer Antriebswelle eines weiteren Nebenaggregats verbunden ist, und um eine zweite Spannrolle 34 und eine Umlenkrolle 48 einer zweiten Riemenspannvorrichtung der integrierten Riemenspanneinrichtung 30 der Erfindung geführt.

Die Anzahl der Nebenriemenscheiben 18-22 und weiteren Nebenriemenscheiben 24 ist natürlich nicht auf die oben anhand des Ausführungsbeispiels von Fig. 1 beschriebene beschränkt. Zum Beispiel kann der erste Antriebriemen 25 auch nur um eine oder zwei oder auch um mehr als drei Nebenriemenscheiben 18-22 geführt sein, und auch der zweite Antriebriemen 26 kann um mehr als eine weitere Nebenriemenscheibe 24 geführt sein.

Die Nebenriemenscheiben 18-24 sind mit jeweiligen Antriebswellen von Nebenaggregaten des Kraftfahrzeugs, wie zum Beispiel einem Generator, einer Wasserpumpe für die Wasserkühlung des Fahrzeugmotors, einer Servopumpe für die Lenkhilfe, einem Kompressor einer Klimaanlage und dergleichen verbunden.

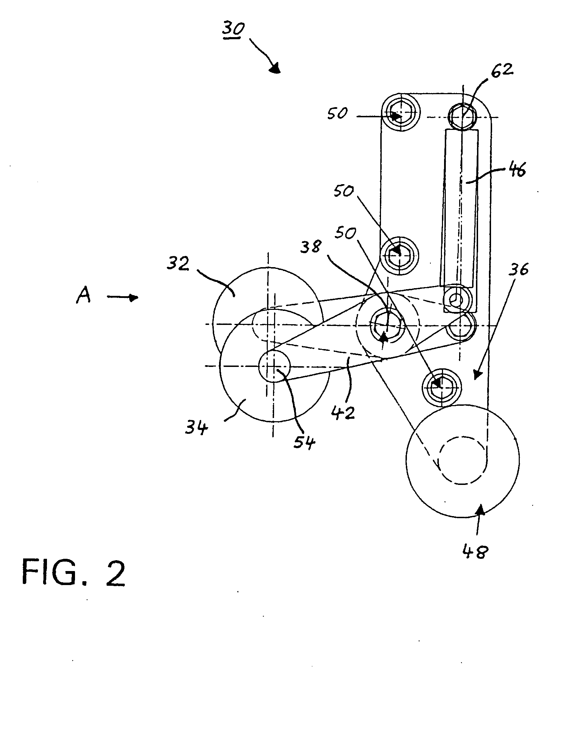

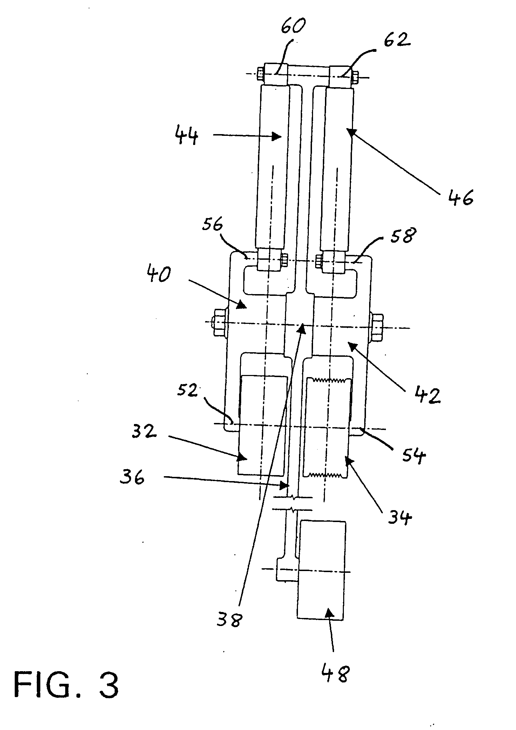

Der Aufbau der Riemenspanneinrichtung 30 der Erfindung wird nun unter Bezugnahme auf Fig. 2 und 3 näher beschrieben.

Wie bereits oben erwähnt, umfasst die Riemenspanneinrichtung 30 der Erfindung eine erste und eine zweite Riemenspannvorrichtung zum Einstellen der Riemenspannung des ersten bzw. des zweiten Antriebriemens 25, 26. Die erste und die zweite Riemenspannvorrichtung sind in dem Ausführungsbeispiel von Fig. 1 und 2 spiegelbildlich zu beiden Seiten einer Trägerplatte 36 angebracht, die als Haltevorrichtung der Erfindung dient. Wie in Fig. 2 zu erkennen, ist diese Trägerplatte 36 zum Beispiel mittels mehrerer Befestigungsschrauben 50 an einem Kurbelgehäuse, einem Aggregatträger oder dergleichen an einer vorbestimmten Position im Motorraum des Kraftfahrzeugs befestigt.

Die erste Riemenspannvorrichtung der integrierten Riemenspanneinrichtung 30 enthält als Hauptbestandteile einen ersten Spannhebel 40, die erste Spannrolle 32 und eine erste Spannfeder 44. Der erste Spannhebel 40 ist zum Beispiel über ein Gleitlager drehbar um eine Drehachse 38 an der Trägerplatte 36 befestigt. An einem Ende des ersten Spannhebels 40 ist eine Halterung 52 vorgesehen, an der drehbar die erste Spannrolle 32 befestigt ist, um welche der erste Antriebriemen 25 geführt ist. Die erste Spannfeder 44, die bevorzugt in der Art eines Stoßdämpfers ausgebildet ist, d.h. als elastisch gedämpfte Druckfeder wirkt, ist mit ihrem einen Ende über eine Halterung 60 fest an der Trägerplatte 36 befestigt und mit ihrem anderen Ende über eine Halterung 56 fest an dem der ersten Spannrolle 32 abgewandten Ende des ersten Spannhebels 40 befestigt. Durch den drehbar gelagerten ersten Spannhebel 40 und die erste Spannfeder 44 wird die erste Spannrolle 32 in die Richtung nach oben in Fig. 2 vorgespannt, um den um die erste Spannrolle 32 geführten ersten Antriebriemen 25 zu spannen.

Die zweite Riemenspannvorrichtung der integrierten Riemenspanneinrichtung 30 ist analog zu der oben beschriebenen ersten Riemenspannvorrichtung aufgebaut. Insbesondere enthält die zweite Riemenspannvorrichtung 30 enthält als Hauptbestandteile einen zweiten Spannhebel 42, die zweite Spannrolle 34 und eine zweite Spannfeder 44. Der zweite Spannhebel 42 ist zum Beispiel über ein Gleitlager drehbar um eine Drehachse 38 an der Trägerplatte 36 befestigt. An einem Ende des zweiten Spannhebels 42 ist eine Halterung 54 vorgesehen, an der drehbar die zweite Spannrolle 34 befestigt ist, um welche der zweite Antriebriemen 26 geführt ist. Die zweite Spannfeder 46, die ebenfalls bevorzugt in der Art eines Stoßdämpfers ausgebildet ist, d.h. als elastisch gedämpfte Druckfeder wirkt, ist mit ihrem einen Ende über eine Halterung 62 fest an der Trägerplatte 36 befestigt und mit ihrem anderen Ende über eine Halterung 58 fest an dem der zweiten Spannrolle 34 abgewandten Ende des zweiten Spannhebels 42 befestigt. Durch den drehbar gelagerten zweiten Spannhebel 42 und die zweite Spannfeder 46 wird die zweite Spannrolle 34 ebenfalls in die Richtung nach oben in Fig. 2 vorgespannt, um den um die zweite Spannrolle 34 geführten zweiten Antriebriemen 26 zu spannen.

An der Trägerplatte 36 der integrierten Riemenspanneinrichtung 30 ist ferner eine Umlenkrolle 48 drehbar montiert, die in dem gezeigten Ausführungsbeispiel Bestandteil der zweiten Riemenspannvorrichtung ist um die der zweite Antriebriemen 26 geführt. Alternativ oder zusätzlich kann auch die erste Riemenspannvorrichtung der integrierten Riemenspanneinrichtung 30 mit einer entsprechenden Umlenkrolle auf der anderen Seite der Trägerplatte 36 versehen sein. Wie in Fig. 1 veranschaulicht, dient diese Umlenkrolle 48 der geeigneten Führung des zweiten Antriebriemens 26 zwischen der Riemenspanneinrichtung 30 und der weiteren Nebenriemenscheibe 24, um das mit der weiteren Nebenriemenscheibe 24 verbundene weitere Nebenaggregat möglichst platzsparend in dem Riemengetriebe 10 zu integrieren.

Wie bereits oben erwähnt und besonders deutlich in Fig. 3 zu erkennen, sind die beiden Riemenspannvorrichtungen der integrierten Riemenspanneinrichtung 30 spiegelbildlich und parallel zu beiden Seiten der Trägerplatte 36 angeordnet, sodass sie in den parallelen Laufebenen (rechts und links in Fig. 3) des ersten und des zweiten Antriebriemens 25, 26 liegen. Dies ermöglicht einen besonders kompakten Aufbau der Riemenspanneinrichtung 30 und auch eine platzsparende Anordnung der Nebenaggregate des Kraftfahrzeugs.

Um einen noch kompakteren und platzsparenderen Aufbau der Riemenspanneinrichtung 30 und damit auch des gesamten Riemengetriebes 10 für die mehreren Nebenaggregate zu erzielen, sind die beiden Drehachsen des ersten Spannhebels 40 der ersten Riemenspannvorrichtung und des zweiten Spannhebels 42 der zweiten Riemenspannvorrichtung vorzugsweise als gemeinsame Drehachse 38 ausgebildet. Außerdem sind die Halterungen 60, 62 der ersten und der zweiten Spannfeder 44, 46 an der Trägerplatte 36 bevorzugt als gemeinsame Halterung ausgebildet.

Die besonderen Vorteile der erfindungsgemäßen Riemenspanneinrichtung 30 sind der kompakte und platzsparende Aufbau, der auch in einem besonders kompakten Aufbau des Riemengetriebes 10 für mehrere Nebenaggregate resultiert, die einfache Montage der Riemenspanneinrichtung 30, und die einfache Montage der Antriebriemen 25, 26 in dem Riemengetriebe 10.

## Patentansprüche

1. Riemenspanneinrichtung (30), mit einer ersten Riemenspannvorrichtung zum Einstellen der Riemenspannung eines ersten Antriebriemens (25) und einer zweiten Riemenspannvorrichtung zum Einstellen der Riemenspannung eines zweiten Antriebriemens (26), wobei die Laufebene des ersten Antriebriemens (25) im Wesentlichen parallel zu der Laufebene des zweiten Antriebriemens (26) ist, und wobei die erste Riemenspannvorrichtung und die zweite Riemenspannvorrichtung als integrale Riemenspanneinrichtung an einer gemeinsamen Haltevorrichtung (36) angebracht sind.

2. Riemenspanneinrichtung nach Anspruch 1,
**dadurch gekennzeichnet,**
**dass** die erste Riemenspannvorrichtung aufweist:
einen um eine Drehachse (38) drehbar an der Haltevorrichtung (36) befestigten ersten Spannhebel (40); eine an einem Ende des ersten Spanhebels (40) drehbar befestigte erste Spannrolle (32), um welche der erste Antriebsriemen (25) geführt ist; und eine erste Spannfeder (44), deren eines Ende fest an der Haltevorrichtung (36) befestigt ist und deren anderes Ende an dem der ersten Spannrolle (32) abgewandten Ende des ersten Spannhebels (40) befestigt ist, zum Spannen des um die erste Spannrolle (32) geführten ersten Antriebriemens (25).

3. Riemenspanneinrichtung nach Anspruch 1 oder 2,
**dadurch gekennzeichnet,**
**dass** die zweite Riemenspannvorrichtung aufweist:
einen um eine Drehachse (38) drehbar an der Haltevorrichtung (36) befestigten zweiten Spannhebel (42); eine an einem Ende des zweiten Spannhebels (42) drehbar befestigte zweite Spannrolle (34), um welche der zweite Antriebriemen (26) geführt ist; und eine zweite Spannfeder (46), deren eines Ende fest an der Haltevorrichtung (36) befestigt ist und deren anderes Ende an dem der zweiten Spannrolle (34) abgewandten Ende des zweiten Spannhebels (42) befestigt ist, zum Spannen des um die zweite Spannrolle (34) geführten zweiten Antriebriemens (26).

4. Riemenspanneinrichtung nach Anspruch 3,
**dadurch gekennzeichnet,**
**dass** die Drehachse (38) des ersten Spannhebels (40) und die Drehachse (38) des zweiten Spannhebels (42) eine gemeinsame Drehachse (38) an der Haltevorrichtung (36) sind.

5. Riemenspanneinrichtung nach einem der Ansprüche 1 bis 4,
**dadurch gekennzeichnet,**
**dass** die Haltevorrichtung (36) in der Form einer Trägerplatte ausgebildet ist; und
**dass** die erste Riemenspannvorrichtung und die zweite Riemenspannvorrichtung spiegelbildlich zu beiden Seiten der Trägerplatte (36) angeordnet sind.

6. Riemenspanneinrichtung nach einem der Ansprüche 2 bis 5,
**dadurch gekennzeichnet,**
**dass** die erste Spannfeder (44) der ersten Riemenspannvorrichtung und/oder die zweite Spannfeder (46) der zweiten Riemenspannvorrichtung eine Stoßdämpfereigenschaft besitzen.

7. Riemenspanneinrichtung nach einem der Ansprüche 3 bis 6,
**dadurch gekennzeichnet,**
**dass** die erste und die zweite Spannfeder (44, 46) an einer gemeinsamen Halterung (60, 62), die im Wesentlichen parallel zu der gemeinsamen Drehachse (38) der des ersten und des zweiten Spannhebels (40, 42) vorgesehen ist, an der Haltevorrichtung (36) befestigt sind.

8. Riemenspanneinrichtung nach einem der Ansprüche 2 bis 7,
**dadurch gekennzeichnet,**
**dass** die erste und/oder die zweite Riemenspannvorrichtung ferner eine Umlenkrolle (48) zum Umlenken des ersten bzw. des zweiten Antriebriemens (25, 26) aufweist.

9. Riemengetriebe (10) für ein Kraftfahrzeug, mit einer ersten Hauptriemenscheibe (14), die mit einer Kurbelwelle eines Kraftfahrzeugmotors gekoppelt ist; wenigstens einer Nebenriemenscheibe (18-22), die mit einer Antriebswelle eines Nebenaggregats verbunden ist; einem ersten Antriebriemen (25), der um die erste Hauptriemenscheibe (14) und die wenigstens eine Nebenriemenscheibe (18-22) geführt ist; einer zweiten Hauptriemenscheibe (14), die ebenfalls mit der Kurbelwelle des Kraftfahrzeugmotors gekoppelt ist; wenigstens einer weiteren Nebenriemenscheibe (24), die mit einer Antriebswelle eines weiteren Nebenaggregats verbunden ist; einem zweiten Antriebriemen (26), der um die zweite Hauptriemenscheibe (16) und die wenigstens eine weitere Nebenriemenscheibe (24) geführt ist; und einer Riemenspanneinrichtung (30) nach einem der Ansprüche 1 bis 8 zum Einstellen der Riemenspannung des ersten Antriebriemens (25) und zum Einstellen der Riemenspannung des zweiten Antriebriemens (26), wobei die Laufebene des ersten Antriebriemens (25) um die erste Hauptriemenscheibe (14) und die wenigstens eine Nebenriemenscheibe (18-22) im Wesentlichen parallel zu der Laufebene des zweiten Antriebriemens (26) um die zweite Hauptriemenscheibe (16) und die wenigstens eine weitere Nebenriemenscheibe (24) ist.

10. Riemengetriebe nach Anspruch 9,
**dadurch gekennzeichnet,**
**dass** die erste Hauptriemenscheibe (14) und die zweite Hauptriemenscheibe (16) koaxial an einer Hauptriemenscheibeneinheit (12) vorgesehen sind, die mit der Kurbelwelle des Fahrzeugmotors gekoppelt ist.

11. Riemengetriebe nach Anspruch 9 oder 10,
**dadurch gekennzeichnet,**
**dass** die erste Hauptriemenscheibe (14) und die zweite Hauptriemenscheibe (16) an einer Hauptriemenscheibeneinheit (12) vorgesehen sind, die mit der Kurbelwelle des Fahrzeugmotors gekoppelt ist und einen integrierten Schwingungsdämpfer aufweist.
